# EUROPEAN PATENT APPLICATION

(11) **EP 4 806 866 A2**
(43) Date of publication of application: **16.09.2026**
(21) Application number: 26153877.1
(22) Date of filing: 23.01.2026
(51) Int. Cl.: C04B 35/573, C04B 35/628, C04B 35/80

(54) **SLURRY INFILTRATION OF SACRIFICIAL MATERIAL**

(30) Priority: 23.01.2025 US 202519035545
(71) Applicant: RTX Corporation, Farmington, CT 06032 (US)
(72) Inventor: MASTROBATTISTO, Daniel, Aliso Viejo, 92656 (US); HEJAZI, Vahid, Carlsbad, 92009 (US); SRINIVASAN, Gajawalli, South Windsor, 06074 (US); BEALS, James T., West Hartford, 06107 (US)
(74) Representative: Dehns

(57) **Abstract**

A process for fabricating a melt-infiltrated ceramic matrix composite, comprising the steps of fabricating a ceramic fiber preform comprising fibers, fiber tows, or both fibers and fiber tows (20, 30); depositing a structural support material on the fibers, the fiber tows, or the fibers and fiber tows to form a partially densified ceramic matrix composite comprising pores, a porous network or both pores and a porous network; preparing a slurry composition comprising sacrificial particles (10); infiltrating the slurry composition into the partially densified ceramic matrix composite and depositing the sacrificial particles into the pores, the porous network or both the pores and porous network; freeze-drying a slurry infiltrated partially densified ceramic matrix composite; sublimating a frozen slurry infiltrated partially densified ceramic matrix composite; and, melt-infiltrating a sublimated partially densified ceramic matrix composite to form a melt-infiltrated ceramic matrix composite.

## Description

### FIELD OF THE INVENTION

The subject matter disclosed herein relates to the slurry infiltration of sacrificial material and, in particular, to the slurry infiltration of sacrificial material using freeze drying for more uniform distribution.

### BACKGROUND OF THE INVENTION

Uniformly distributing sacrificial materials in a ceramic matrix composite ("CMC") preform using slurry infiltration may be challenging. After slurry infiltration, the solvent may be typically removed using a thermal drying process. During thermal drying, the solvent may be in a liquid state. As the solvent may evaporate the volume of the slurry decreases, then surface tension may result in menisci at the interface of the solvent and preform, due to the higher capillary force within the meniscus area. The surface tension created pulls sacrificial particles together creating a dense cluster. The resulting matrix may have large voids and pockets of densely clustered particles. During melt infiltration, large voids may not provide the sufficient capillary interaction required for future infiltration by a molten material in a molten-infiltration process resulting in isolated matrix pores. In addition, the clustered sacrificial particles may react with the molten material to create the final matrix. Therefore, if the sacrificial materials are non-uniformly distributed throughout the CMC preform, the final CMC matrix may contain a non-uniform distribution of materials.

The non-uniform distribution of materials may result in solidification stress, e.g., non-uniform solidification shrinkage/expansion, and a non-uniform distribution of critical properties in the final composite, e.g., coefficient of thermal expansion (CTE) and thermal conductivity. Often the solidification stresses and the variation in CTE across the composite may result in micro cracking leading to an inferior or defective resultant CMC material. In addition, the non-uniform distribution of sacrificial materials may result in a matrix that contains residual unreacted low melting point materials, e.g., materials exhibiting a melting point of less than 1400 °C.

Consequently, there exists a need to control the distribution of infiltrant material to achieve a uniform distribution within a ceramic matrix composite prior to undergoing melt-infiltration.

### SUMMARY OF THE INVENTION

The present disclosure is directed, in a first aspect, to a process for fabricating a melt-infiltrated ceramic matrix composite, comprising the steps of: fabricating a ceramic fiber preform comprising at least one fiber, at least one fiber tow, or at least one fiber and fiber tow; optionally depositing an interface coating on the at least one fiber, the at least one fiber tow, or the at least one fiber and fiber tow; depositing a structural support material on the at least one fiber, the at least one fiber tow, or the at least one fiber and fiber tow to form a partially densified ceramic matrix composite comprising at least one pore, at least one porous network or at least one pore and porous network; preparing at least one slurry composition comprising at least one sacrificial particle; infiltrating the slurry composition into the partially densified ceramic matrix composite and depositing the at least one sacrificial particle into the at least one pore, the at least one porous network or the at least one pore and porous network; freeze drying a slurry infiltrated partially densified ceramic matrix composite; sublimating a frozen slurry infiltrated partially densified ceramic matrix composite; melt-infiltrating a sublimated partially densified ceramic matrix composite to form a melt-infiltrated ceramic matrix composite; and optionally heat treating the melt-infiltrated ceramic matrix composite.

In further embodiments of the present disclosure, including further embodiments of the above exemplary embodiments, the at least one slurry further comprises one or more of the following: a solvent, a binder, a gelling agent, a dispersant, a wetting agent, a pH adjustor, an ice nucleator, a recrystallization inhibitor, and combinations thereof.

In further embodiments of the present disclosure, including further embodiments of the above exemplary embodiments, the at least one gelling agent and/or binders comprising any one or more of the following: polyvinyl alcohol (PVA), polyvinyl butyral (PVB), lignosulfonates, starches aluminosilicate, carboxymethylcellulose, methyl cellulose, carbo-ethyl cellulose, hydroxypropyl methyl cellulose, gellan gum, gelatins, pectin, aragose gum, curdlan gum, xanthium gum, konjac gum, carrageenan gum, alginates, sodium alginate, agar gum, non-ionic copolymer surfactants, and combinations thereof.

In further embodiments of the present disclosure, including further embodiments of the above exemplary embodiments, the at least one sacrificial material comprises any one or more of the following materials: carbon source materials, nitride source materials, boride source materials, oxide source materials, oxide phase precursor materials, metal source materials and metalloid source materials.

In further embodiments of the present disclosure, including further embodiments of the above exemplary embodiments, the carbon source materials comprise any one or more of the following: carbon-based materials, carbide materials, graphite, carbon nanotube, carbon nanofiber, and diamond.

In further embodiments of the present disclosure, including further embodiments of the above exemplary embodiments, the carbide materials comprise any one or more of the following: boron carbides, zirconium carbides, hafnium carbides, tantalum carbides, niobium carbides, titanium carbides, molybdenum carbides, tungsten carbides, vanadium carbides, chromium carbides, ytterbium carbides, and yttrium carbides.

In further embodiments of the present disclosure, including further embodiments of the above exemplary embodiments, the nitride source materials comprise any one or more of the following: silicon nitrides, titanium nitrides, boron nitrides, zirconium nitrides, hafnium nitrides, niobium nitrides, tantalum nitrides, vanadium nitrides, ytterbium nitrides, and yttrium nitrides.

In further embodiments of the present disclosure, including further embodiments of the above exemplary embodiments, the boride source materials comprise any one or more of the following: silicon borides, titanium borides, zirconium borides, hafnium borides, niobium borides, tantalum borides, vanadium borides, molybdenum borides, ytterbium borides, and yttrium borides.

In further embodiments of the present disclosure, including further embodiments of the above exemplary embodiments, the oxide source materials comprise any one or more of the following: aluminum oxides, silicon oxides, tantalum oxides, boron oxides, hafnium oxides, zirconium oxides, ytterbium oxides, and yttrium oxides.

In further embodiments of the present disclosure, including further embodiments of the above exemplary embodiments, the oxide phase precursor materials comprise one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

In further embodiments of the present disclosure, including further embodiments of the above exemplary embodiments, depositing comprises one or more of the following techniques: slurry infiltration and chemical vapor infiltration.

In further embodiments of the present disclosure, including further embodiments of the above exemplary embodiments, the interface coating or the structural support material or both the interface coating and the structural support material comprises one or more of the following materials: carbides, carbon materials, nitrides, borides, and combinations thereof.

In further embodiments of the present disclosure, including further embodiments of the above exemplary embodiments, the carbides comprise one or more of the following: silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, and combinations thereof.

In further embodiments of the present disclosure, including further embodiments of the above exemplary embodiments, the carbon materials comprise one or more of the following: pyrolytic carbons, graphite and combinations thereof.

In further embodiments of the present disclosure, including further embodiments of the above exemplary embodiments, the nitrides comprise one or more of the following: silicon nitrides, titanium nitrides, boron nitrides, zirconium nitrides, hafnium nitrides, niobium nitrides, tantalum nitrides, vanadium nitrides, ytterbium nitrides, yttrium nitrides, and combinations thereof.

In further embodiments of the present disclosure, including further embodiments of the above exemplary embodiments, the borides comprise one or more of the following: silicon borides, titanium borides, zirconium borides, hafnium borides, niobium borides, tantalum borides, vanadium borides, ytterbium borides, yttrium borides, and combinations thereof.

In further embodiments of the present disclosure, including further embodiments of the above exemplary embodiments, melt-infiltrating further comprises melt-infiltrating one or more of the following molten infiltrants: metals, metalloids, metal alloys, metalloid alloys, glasses, and combinations thereof.

In another embodiment, the present disclosure is directed to a process for fabricating a melt-infiltrated ceramic matrix composite, comprising the steps of fabricating a ceramic fiber preform comprising at least one fiber, at least one fiber tow, or at least one fiber and fiber tow; optionally depositing an interface coating on the at least one fiber, the at least one fiber tow, or the at least one fiber and fiber tow; depositing a structural support material on the at least one fiber, the at least one fiber tow, or the at least one fiber and fiber tow to form a partially densified ceramic matrix composite comprising at least one pore, at least one porous network or at least one pore and porous network; preparing at least one slurry composition comprising at least one sacrificial particle; infiltrating the slurry composition into the partially densified ceramic matrix composite and depositing the at least one sacrificial particle into the at least one pore, the at least one porous network or the at least one pore and porous network; supercritical drying a slurry infiltrated partially densified ceramic matrix composite; melt-infiltrating a sublimated partially densified ceramic matrix composite to form a melt-infiltrated ceramic matrix composite; and optionally heat treating the melt-infiltrated ceramic matrix composite.

In yet another embodiment, the present disclosure is directed to a melt-infiltrated ceramic matrix composite fabricated according to the process comprising the steps of fabricating a ceramic fiber preform comprising at least one fiber, at least one fiber tow, or at least one fiber and fiber tow; optionally depositing an interface coating on the at least one fiber, the at least one fiber tow, or the at least one fiber and fiber tow; depositing a structural support material on the at least one fiber, the at least one fiber tow, or the at least one fiber and fiber tow to form a partially densified ceramic matrix composite comprising at least one pore, at least one porous network or at least one pore and porous network; preparing at least one slurry composition comprising at least one sacrificial particle; infiltrating the slurry composition into the partially densified ceramic matrix composite and depositing the at least one sacrificial particle into the at least one pore, the at least one porous network or the at least one pore and porous network; drying a slurry infiltrated partially densified ceramic matrix composite; melt-infiltrating a sublimated partially densified ceramic matrix composite to form a melt-infiltrated ceramic matrix composite; and optionally heat treating the melt-infiltrated ceramic matrix composite.

In further embodiments of the present disclosure, including further embodiments of the above exemplary embodiments, wherein drying comprises the steps of supercritical drying a slurry infiltrated partially densified ceramic matrix composite; or freeze drying a slurry infiltrated partially densified ceramic matrix composite; and sublimating a frozen slurry infiltrated partially densified ceramic matrix composite.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 illustrates an uneven carbon source distribution that may occur during a standard drying procedure of a partially densified ceramic matrix material.
FIG. 2 shows an exemplary uniform distribution of a carbon source in a partially densified ceramic matrix material during production when freeze drying.
FIG. 3 is a flowchart illustrating an exemplary method for fabricating a melt-infiltrated ceramic matrix composite via uniformly distributing a sacrificial particle within a partially densified ceramic matrix material intermediate product.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

As used herein, a "coated preform" or "coated substrate" refers to an interface coated ceramic fiber preform or an interface coated ceramic fiber substrate. As also used herein, a "partially densified CMC" or "partially densified ceramic matrix composite" refers to a coated substrate or preform that includes a structural support material layer that facilitates rigidization of the preform to become self-supporting, also known as a rigidized coated substrate or rigidized coated preform. As also used further herein, a "ceramic matrix composite" or "CMC" refers to a matrix infiltrated into the coated substrate or coated preform or alternatively, a matrix infiltrated into the rigidized partially densified CMC.

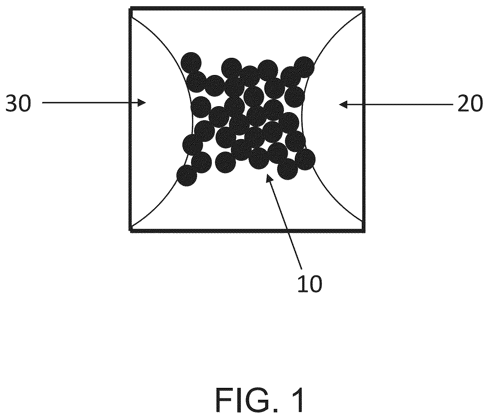

Referring now to Fig. 1, the potential effect of a standard drying procedure on the distribution of sacrificial material, e.g., a carbon source, in a CMC is illustrated. The black dots 10 may represent diamond particles. However, any sacrificial material may be distributed in the partially densified ceramic matrix composite can be represented by the black dots 10, e.g., carbide or metal particles that may be desired to be present in the CMC material. As can be seen, the black dots 10 may designate the sacrificial material, e.g., carbon source, that may clog up a path between two fibers and/or fiber tows 20, 30 by non-uniformly distributing within the space around and proximate to the fibers and/or fiber tows (see FIG. 1). During melt infiltration, sacrificial material may react with the molten infiltrating material. This reaction may produce volumetric and/or chemistry changes in both the molten infiltrating material and sacrificial material. For example, once melt infiltrated, a sacrificial material, such as a diamond particle, may react with the molten infiltrating silicon alloy to form silicon carbide. The resulting silicon carbide may occupy a volume that is approximately 3.6 times larger than the original volume occupied by the original diamond particles. Such volumetric expansion may "choke off" infiltration paths if the carbon source is not distributed uniformly or is packed too tightly at certain locations within the partially densified ceramic matrix material. Additionally, the diamond-to-silicon carbide reaction removes silicon from the melt infiltrating silicon alloy, which alters the final chemistry of the resultant silicide phase(s) when the silicon alloy solidifies. In such an embodiment, a non-uniform distribution of diamond particles will result in a non-uniform distribution of the resultant silicon carbide, diamond and silicide phases. The resulting ceramic matrix composite will exhibit and possess high internal stresses due to a coefficient of thermal expansion (CTE) mismatch between the aforementioned materials. The non-uniformly distributed materials may also lead to other properties, e.g., thermal conductivity, that then also become non-uniform throughout the resultant CMC material. These additional non-uniform properties of the resultant CMC material again may lead to an inferior or defective resultant CMC material.

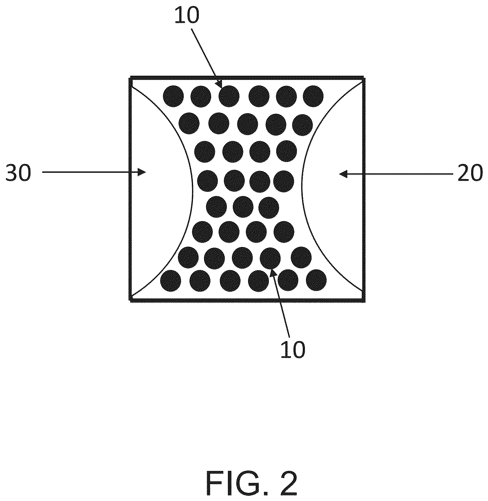

Referring now to FIG. 2, the sacrificial material, e.g., diamond particles, in the partially densified ceramic matrix composite may be even more uniformly distributed when freeze drying and either a solvent containing a gelling agent or a solvent containing a binder and aforementioned slurry additives are used. In either exemplary embodiment, each exemplary slurry may lead to a more evenly distributed sacrificial material within the infiltrated partially densified ceramic matrix composite. Freeze drying utilizing either slurry additives or gelling agents may produce uniformly distributed particles that avoid such future "choking off" occurrences. For example, once infiltrated and frozen, the sacrificial material represented by black dots 10 may be uniformly distributed in the space(s) between two fibers and/or fiber tows 20, 30 of the partially densified ceramic matrix composite where the open space between the sacrificial material may later be filled with silicide and reaction formed SiC.

A further way to achieve more uniform sacrificial material distribution may be made by minimizing ice crystal size to the extent the resultant ice crystals may be smaller than the size of the sacrificial material within the partially densified ceramic matrix composite. During freezing, large ice crystals may move particles to ice crystal grain boundaries. Such particle movement may cause unwanted particle packing, i.e., non-uniform sacrificial material distribution, at such grain boundaries, and may achieve lower particle concentration at areas from where particles may have been moved by the large ice crystals. However, ice crystal size may be suppressed when either gelling the slurry prior to freezing or utilizing a solvent containing a binder and slurry additives including, but not limited to, ice nucleators, recrystallization inhibitors, combinations thereof, and the like. In either embodiment, if either the gel achieves sufficient strength or the ice crystal size is suppressed, ice crystals may form significantly smaller than the size of the sacrificial material(s). As a result, the particulate material(s) may exhibit and possess uniform distribution.

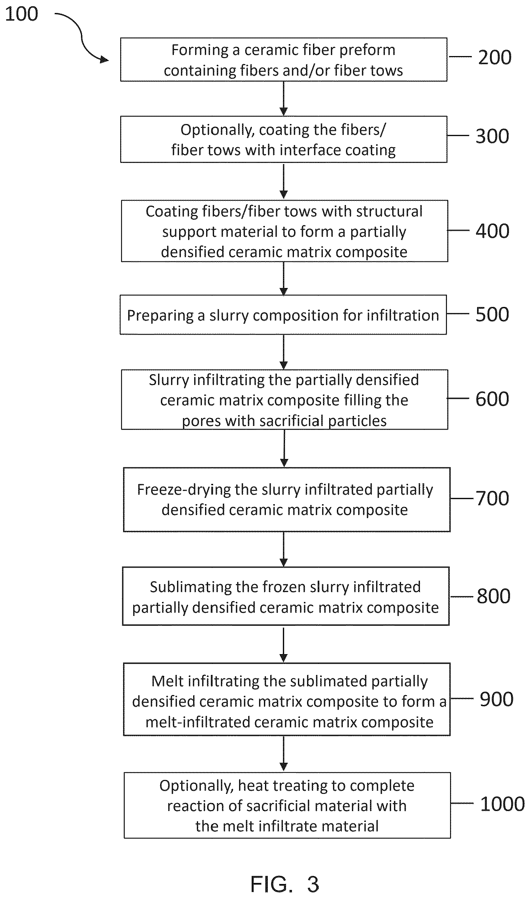

Referring now to FIG. 3, an exemplary process 100 for fabricating a melt-infiltrated ceramic matrix composite via uniformly distributing sacrificial material within a partially densified ceramic matrix composite intermediate product is shown. At an exemplary step 200 of FIG. 3, a ceramic fiber preform containing fibers and/or fiber tows may be fabricated. The ceramic fiber preform may be fabricated using any suitable technique known. Suitable fibers for use as the fibers and/or fiber tows may include, but are not limited to, silicon carbide, carbon, aluminum oxide, silicon nitride, combinations thereof, and the like.

Next, at an optional exemplary step 300 of FIG. 3, the fibers and/or fiber tows of the ceramic fiber preform may be coated with an interface coating to form a coated preform. Suitable interface coating materials may include, but are not limited to, carbides such as silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; carbon materials such as pyrolytic carbons, graphite in one or more of flake, particle or fiber form; carbon nanotubes, carbon nanofibers, diamonds, combinations thereof, and the like; nitrides such as silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides such as silicon borides, titanium borides, zirconium borides, hafnium borides, niobium borides, tantalum borides, vanadium borides, ytterbium borides, yttrium borides, combinations thereof, and the like; combinations thereof, and the like. The interface coating materials may be deposited using any suitable deposition technique. Suitable deposition techniques may include, but are not limited to, chemical vapor infiltration, slurry infiltration, combinations thereof, and the like.

Next, at an exemplary step 400 of FIG. 3, IFC coated fibers and/or fiber tows of the coated preform may be coated further with a structural support material to form a partially densified ceramic matrix composite. Suitable structural support materials may include, but are not limited to, carbides such as silicon carbide, boron carbide, combinations thereof, and the like; carbon materials such as pyrolytic carbon, combinations thereof, and the like; nitrides such as silicon nitride, combinations thereof, and the like; combinations thereof, and the like. The structural support materials may be deposited using any suitable deposition technique. Suitable deposition techniques may include, but are not limited to, chemical vapor infiltration, slurry infiltration, combinations thereof, and the like.

Next, at an exemplary step 500 of FIG. 3, an exemplary slurry containing various additives suitable for infiltration into the partially densified ceramic matrix composite may be prepared. Slurry additives, e.g., sacrificial particles, binders, gelling agents, dispersants, wetting agents, pH adjustors, ice nucleators, recrystallization inhibitors, combinations thereof, and the like, may be used to enhance the properties of the slurry. More particular, a combination of sacrificial particles; solvent; binder and/or gelling agent; dispersant and/or wetting agent; pH adjustor; ice nucleator; and, recrystallization inhibitor may improve the exemplary freeze drying process disclosed herein and achieve the desired uniform particle distribution within the partially densified ceramic matrix composite. Additives of any shape, e.g., particulate, flake or fiber; or size, e.g., nanometer, submicron, micron, combinations comprising any one of the foregoing, and the like; may be added to a slurry prior to slurry infiltration taking place.

The sacrificial particles may include, but are not limited to, carbon-based materials; various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations thereof, and the like; graphite, e.g., flake, particle or fiber forms; carbon nanotubes, carbon nanofibers, diamond particles, combinations thereof, and the like; nitrides, including but not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations thereof, and the like; borides, including but not limited to, silicon borides, titanium borides, zirconium borides, hafnium borides, niobium borides, tantalum borides, vanadium borides, ytterbium borides, yttrium borides, combinations thereof, and the like; silicides including, but not limited to, hafnium silicide, zirconium silicide, titanium silicide, tantalum silicide, iridium silicide, molybdenum silicide, tungsten silicide, boron silicide, niobium silicide, ytterbium silicide, vanadium silicide, scandium silicide, yttrium silicide, combinations thereof, and the like; oxides, including but not limited to, aluminum oxides, silicon oxides, tantalum oxides, boron oxides, hafnium oxides, zirconium oxides, ytterbium oxides, yttrium oxides, combinations thereof, and the like; oxide phase precursors including, but not limited to, alkaline earth metal alumino silicates, boro-silicates (B₂O₃-SiO₂), alkaline earth metal alumino silicates, such as AEO-Al₂O₃-SiO₂, where AE = Be, Ca, Ba and Sr; rare earth alumino silicates, such as REO-Al₂O₃-SiO₂, where RE = La, Ce, Pr, Nd, Pm, Sm, Eu, Gd, Tb, Dy, Ho, Er, Tm, Yb, Lu and Y; combinations thereof, and the like; metals including, but not limited to, zirconium, hafnium, tantalum, niobium, titanium, molybdenum, tungsten, vanadium, chromium, ytterbium, yttrium, combinations thereof, and the like; metalloids including, but not limited to, silicon, boron, combinations thereof, and the like; alloys comprising any one or more of the aforementioned metal(s) and/or metalloid(s); as well as combinations thereof, and the like.

The binders and gelling agents may bind particles together in the resultant matrix and also may prevent the slurry from leaking out of the preform post infiltration. Suitable binders may include, but are not limited to, polyvinyl alcohol (PVA), polyvinyl butyral (PVB), lignosulfonates, acrylic co-polymers, combinations thereof, and the like. Suitable gelling agents may include, but are not limited to, aluminosilicate, carboxymethylcellulose, starches, methyl cellulose, carbo-ethyl cellulose, hydroxypropyl methyl cellulose, gellan gum, gelatins, pectin, aragose gum, curdlan gum, xanthium gum, konjac gum, carrageenan gum, alginates, sodium alginate, agar gum, non-ionic copolymer surfactants; combinations thereof, and the like.

The dispersants and wetting agents may reduce air bubbles, improve slurry penetration within the preform, prevent particle clustering, increase particle loading, and reduce slurry viscosity. Suitable dispersant and wetting agents may include, but are not limited to, Triton X-100, Dysperbyk BYK156, combinations thereof, and the like. The pH adjustors may increase particle dispersion within the slurry that may improve slurry penetration within the preform, prevent particle clustering, increase particle loading, and reduce slurry viscosity. For example, when seeking to increase the pH, ammonia may be added to the slurry. In another example, when seeking to decrease the pH, hydrochloric acid may be added to the slurry.

The ice nucleators may increase ice nucleation sites that lead to forming smaller, more dispersant sized ice crystals resulting in more uniform particle distribution. The recrystallization inhibitors may prevent ice crystal growth during frozen storage, create melting point hysteresis and promote super cooling. As a result, ice crystal size may be reduced and improved particle distribution may be achieved.

When preparing the slurry at exemplary step 500, slurry constituents such as the solvent, binders, gelling agents, dispersants, wetting agents, ice nucleators, recrystallization inhibitors, may be mixed using a suitable mixing technique. Suitable mixing techniques may include, but are not limited to, high shear mixing, combinations thereof, and the like. Next, one or more aforementioned sacrificial materials may be added to the mixture and the resultant mixture may be mixed further using the suitable mixing techniques. Next, one or more aforementioned pH adjustor(s) may be added to the mixture and the resultant mixture may be mixed further using the suitable mixing techniques. Next, the resultant slurry may be degassed under a vacuum.

Next, once degassed, at an exemplary step 600 of FIG. 3, the slurry may be infiltrated into the partially densified ceramic matrix composite. In preparation, the partially densified ceramic matrix composite first may be placed in a vacuum chamber. Next, a vacuum may be applied to remove air from both the chamber and the partially densified ceramic matrix composite. The vacuum applied may be less than approximately 100 torr, and as low as approximately 0.1 to approximately 1 Torr.

Once the vacuum is applied, the partially densified ceramic matrix composite may be submerged entirely within the exemplary slurry. Once submerged entirely, the vacuum applied may be released. Once released, the exemplary slurry may penetrate fully the pores and/or porous network of the entirely submerged partially densified ceramic matrix composite. Again, the size, the cross-sectional area, total inner porosity of the entirely submerged partially densified ceramic matrix composite may influence the amount of penetration time required. In at least one embodiment, the amount of penetration time may be at least approximately 30 seconds to approximately 24 hours. In at least one other embodiment, the entirely submerged partially densified ceramic matrix composite may be placed into a pressure vessel if a pressure value of greater than approximately 1 atm to approximately 100 atm may be required to force the slurry through the pores and/or porous network. If the exemplary slurry contained a gelation agent, the gelling process of the slurry within the partially densified ceramic matrix composite may begin occurring. The gelling process may be modulated by altering the temperature and/or adjusting the pH. Once gelation is completed, the partially densified ceramic matrix composite may be extracted from the gel and removed from vacuum chamber or pressure vessel. Any excess gel present may be removed from the exterior of the partially densified ceramic matrix composite.

Next, at an exemplary step 700 of FIG. 3, the slurry infiltrated partially densified ceramic matrix composite may be frozen. The slurry infiltrated partially densified ceramic matrix composite may be placed in a pre-cooled freezer. To achieve the desired extent of freezing, freezing parameters may be monitored and modified as necessary. In at least one embodiment, the freezing parameters may include, but are not limited to, a temperature range of approximately - 197°C to approximately - 20°C; a pressure range of greater than 0 to approximately 100 atm; a freezing rate of approximately 200°C/sec to approximately 1°C/hr.; solidification direction, combinations thereof, and the like, to achieve the desired size of the ice crystals within the slurry infiltrated partially densified ceramic matrix composite. In at least one alternative embodiment, a super critical drying technique, rather than a freeze-drying technique, may be used to eliminate the aforementioned surface tension related to sacrificial particle clustering issues. However, super critical drying techniques are more complex and expensive when compared to freeze drying techniques.

Next, at an exemplary step 800 of FIG. 3, once achieving the desired size of the ice crystals, a vacuum may be applied to begin sublimating the frozen slurry infiltrant within the partially densified ceramic matrix composite. The solidified solvent undergoes sublimation and may transition directly from a solid phase to a vapor phase without passing through a liquid phase. Sublimation may leave the remaining sacrificial particles uniformly spaced, as the absence of liquid solvent may eliminate surface tension, which may otherwise cause particle agglomeration. Consequently, sublimation, rather than melting, must be achieved to prevent clustering and porosity within the partially densified ceramic matrix composite.

After sublimation occurs, the sublimated frozen partially densified ceramic matrix composite may be placed in a drying oven. Any drying oven equipped with a moisture free container for holding the sublimated frozen partially densified ceramic matrix composite may be considered suitable for use herein. The drying oven may be operated at a temperature sufficient to drive off any residual moisture within the partially densified ceramic matrix composite. In at least one embodiment, a sufficient temperature range may be approximately 30°C to approximately 200°C.

Next, at an exemplary step 900 of FIG. 3, a liquid metalloid, metalloid alloy or oxide, for example, silicon, silicon alloy, or alumino-silicate glass, may be infiltrated into the sublimated partially densified ceramic matrix composite containing the sacrificial material suspended and uniformly distributed therein. The open spaces between the fibers and/or fiber tows should contain uniformly distributed sacrificial material, which are not clumped together, and thereby allowing the pores and/or porous network to be adequately open for the infiltrant, e.g., liquid metal, liquid metalloid, metal alloy, metalloid alloy or glass. to infiltrate uniformly between the fibers and/or fiber tows of the sublimated partially densified ceramic matrix composite and around the sacrificial material. Moreover, open spaces that do not contain sacrificial materials also may be minimized by the uniform distribution of sacrificial material to avoid open porosity within the final CMC. The reaction of the sacrificial material, e.g., diamond particles, with the melt-infiltrant, e.g., the liquid metalloid, e.g., a silicon; metalloid alloy, e.g., a silicon alloy; or glass, e.g., an alumino-silicate glass, may lead to the formation of silicon carbide.

When the sacrificial particles include an oxide phase precursor material and the molten infiltrant is an oxide, the aforementioned reaction may lead to forming an oxide phase. In at least one embodiment, the resultant oxide phase may include, but is not limited to, an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof. In at least one other embodiment, the resultant oxide phase may include, but is not limited to, cordierite, mullite, sapphirine, combinations thereof, and the like. In at least yet one other embodiment, the resultant oxide phase may include, but is not limited to, a series of molten glasses each comprising MgO, AlO_{1.5}, and SiO₂ but each having a different eutectic point, that may represent a mixture of at least two of the following glasses: cordierite, mullite, sapphirine, spinel, alumina, periclase, and forsterite.

Next, at an exemplary optional step 1000 of FIG. 3, the resultant melt-infiltrated CMC may be heat-treated to react the sacrificial material with the melt infiltrant as well as at least one or more metals, metal alloys, metalloids, metalloid alloys, oxides aforementioned various particles, fiber protection coatings, combinations thereof, and the like, therein. Melt infiltration may be carried out at low temperatures and dwell times relative to heat treatment temperatures and dwell times in order to minimize reaction of molten materials and sacrificial materials during the melt infiltration step. If the aforementioned reaction is not minimized, unwanted material segregation or infiltration "choking off" may result. Suitable melt infiltration temperature range may be approximately 1100°C to approximately 1600°C. In correlation with the melt infiltration temperature range, suitable dwell time range may be approximately 1 minute to approximately 5 hours. Suitable heat treatment temperature range may be approximately 1400°C to approximately 2000°C. In correlation with the heat treatment temperature range, suitable dwell times may be approximately 30 minutes to approximately 48 hours. Heat treatment temperatures and hold times may be designed to achieve the desired amount of reaction between the molten materials and the sacrificial material. In most circumstances, the desired amount of reaction may be greater than approximately 95% of the total amount of sacrificial materials.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A process for fabricating a melt-infiltrated ceramic matrix composite, comprising the steps of:
fabricating a ceramic fiber preform comprising at least one fiber, at least one fiber tow, or at least one fiber and fiber tow (20, 30);
optionally depositing an interface coating on the at least one fiber, the at least one fiber tow, or the at least one fiber and fiber tow;
depositing a structural support material on the at least one fiber, the at least one fiber tow, or the at least one fiber and fiber tow to form a partially densified ceramic matrix composite comprising at least one pore, at least one porous network or at least one pore and porous network;
preparing at least one slurry composition comprising at least one sacrificial particle (10);
infiltrating the slurry composition into the partially densified ceramic matrix composite and depositing the at least one sacrificial particle into the at least one pore, the at least one porous network or the at least one pore and porous network;
freeze drying a slurry infiltrated partially densified ceramic matrix composite;
sublimating a frozen slurry infiltrated partially densified ceramic matrix composite;
melt-infiltrating a sublimated partially densified ceramic matrix composite to form a melt-infiltrated ceramic matrix composite; and
optionally heat treating the melt-infiltrated ceramic matrix composite.

2. The process according to claim 1, wherein the at least one slurry further comprises one or more of the following: a solvent, a binder, a gelling agent, a dispersant, a wetting agent, a pH adjustor, an ice nucleator, a recrystallization inhibitor, and combinations thereof.

3. The process of claim 2, wherein the at least one gelling agent and/or binders comprising any one or more of the following: polyvinyl alcohol (PVA), polyvinyl butyral (PVB), lignosulfonates, starches aluminosilicate, carboxymethylcellulose, methyl cellulose, carbo-ethyl cellulose, hydroxypropyl methyl cellulose, gellan gum, gelatins, pectin, aragose gum, curdlan gum, xanthium gum, konjac gum, carrageenan gum, alginates, sodium alginate, agar gum, non-ionic copolymer surfactants, and combinations thereof.

4. The process of claim 1, 2 or 3, wherein the at least one sacrificial material comprises any one or more of the following materials: carbon source materials, nitride source materials, boride source materials, oxide source materials, oxide phase precursor materials, metal source materials and metalloid source materials.

5. The process of claim 4, wherein the carbon source materials comprise any one or more of the following: carbon-based materials, carbide materials, graphite, carbon nanotube, carbon nanofiber, and diamond.

6. The process of claim 5, wherein the carbide materials comprise any one or more of the following: boron carbides, zirconium carbides, hafnium carbides, tantalum carbides, niobium carbides, titanium carbides, molybdenum carbides, tungsten carbides, vanadium carbides, chromium carbides, ytterbium carbides, and yttrium carbides.

7. The process of claim 4, 5 or 6, wherein the nitride source materials comprise any one or more of the following: silicon nitrides, titanium nitrides, boron nitrides, zirconium nitrides, hafnium nitrides, niobium nitrides, tantalum nitrides, vanadium nitrides, ytterbium nitrides, and yttrium nitrides.

8. The process of any of claims 4 to 7, wherein the boride source materials comprise any one or more of the following: silicon borides, titanium borides, zirconium borides, hafnium borides, niobium borides, tantalum borides, vanadium borides, molybdenum borides, ytterbium borides, and yttrium borides.

9. The process of any of claims 4 to 8, wherein the oxide source materials comprise any one or more of the following: aluminum oxides, silicon oxides, tantalum oxides, boron oxides, hafnium oxides, zirconium oxides, ytterbium oxides, and yttrium oxides.

10. The process of any of claims 4 to 9, wherein the oxide phase precursor materials comprise one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

11. The process of any preceding claim, wherein depositing comprises one or more of the following techniques: slurry infiltration and chemical vapor infiltration.

12. The process of any preceding claim, wherein the interface coating or the structural support material or both the interface coating and the structural support material comprises one or more of the following materials: carbides, carbon materials, nitrides, borides, and combinations thereof,
wherein, optionally:
the carbides comprise one or more of the following: silicon carbides, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, and combinations thereof; and/or
the carbon materials comprise one or more of the following: pyrolytic carbons, graphite and combinations thereof; and/or
the nitrides comprise one or more of the following: silicon nitrides, titanium nitrides, boron nitrides, zirconium nitrides, hafnium nitrides, niobium nitrides, tantalum nitrides, vanadium nitrides, ytterbium nitrides, yttrium nitrides, and combinations thereof; and/or
the borides comprise one or more of the following: silicon borides, titanium borides, zirconium borides, hafnium borides, niobium borides, tantalum borides, vanadium borides, ytterbium borides, yttrium borides, and combinations thereof.

13. The process of any preceding claim, wherein melt-infiltrating further comprises melt-infiltrating one or more of the following molten infiltrants: metals, metalloids, metal alloys, metalloid alloys, glasses, and combinations thereof.

14. A process for fabricating a melt-infiltrated ceramic matrix composite, comprising the steps of:
fabricating a ceramic fiber preform comprising at least one fiber, at least one fiber tow, or at least one fiber and fiber tow (20, 30);
optionally depositing an interface coating on the at least one fiber, the at least one fiber tow, or the at least one fiber and fiber tow;
depositing a structural support material on the at least one fiber, the at least one fiber tow, or the at least one fiber and fiber tow to form a partially densified ceramic matrix composite comprising at least one pore, at least one porous network or at least one pore and porous network;
preparing at least one slurry composition comprising at least one sacrificial particle (10);
infiltrating the slurry composition into the partially densified ceramic matrix composite and depositing the at least one sacrificial particle into the at least one pore, the at least one porous network or the at least one pore and porous network;
supercritical drying a slurry infiltrated partially densified ceramic matrix composite;
melt-infiltrating a sublimated partially densified ceramic matrix composite to form a melt-infiltrated ceramic matrix composite; and
optionally heat treating the melt-infiltrated ceramic matrix composite.

15. A melt-infiltrated ceramic matrix composite fabricated according to the process comprising the steps of:
fabricating a ceramic fiber preform comprising at least one fiber, at least one fiber tow, or at least one fiber and fiber tow (20, 30);
optionally depositing an interface coating on the at least one fiber, the at least one fiber tow, or the at least one fiber and fiber tow;
depositing a structural support material on the at least one fiber, the at least one fiber tow, or the at least one fiber and fiber tow to form a partially densified ceramic matrix composite comprising at least one pore, at least one porous network or at least one pore and porous network;
preparing at least one slurry composition comprising at least one sacrificial particle (10);
infiltrating the slurry composition into the partially densified ceramic matrix composite and depositing the at least one sacrificial particle into the at least one pore, the at least one porous network or the at least one pore and porous network;
drying a slurry infiltrated partially densified ceramic matrix composite;
melt-infiltrating a sublimated partially densified ceramic matrix composite to form a melt-infiltrated ceramic matrix composite; and
optionally heat treating the melt-infiltrated ceramic matrix composite, wherein, optionally, drying comprises the steps of:
(i) supercritical drying a slurry infiltrated partially densified ceramic matrix composite; or
(ii) freeze drying a slurry infiltrated partially densified ceramic matrix composite; and sublimating a frozen slurry infiltrated partially densified ceramic matrix composite.
